# EUROPEAN PATENT SPECIFICATION

(11) **EP 2 362 162 B1**
(45) Date of publication and mention of the grant of the patent: **12.02.2014**
(21) Application number: 10250305.9
(22) Date of filing: 22.02.2010
(51) Int. Cl.: F24J 2/46, F24J 2/52, H01L 31/048, F24J 2/54

(54) **Solar panel mounting**
Solar-Panel Montage
Montage de panneaux solaires

(43) Date of publication of application: 31.08.2011
(73) Proprietor: Baxi Heating (UK) Limited, Preston, Lancashire PR5 6FN (GB)
(72) Inventor: Marriott, Adam, Preston, Lancashire PR5 6FN (GB); Hock, Jonathan, Preston, Lancashire PR5 6FN (GB)
(74) Representative: Franks, Robert Benjamin

(56) References cited:
- EP-A2- 1 348 915
- WO-A2-2006/101392
- DE-A1- 19 652 568
- DE-A1-102006 041 647
- DE-U1-202007 003 060
- FR-A1- 2 369 446

## Description

### Field of the Invention

The present invention relates to mountings and particularly although not exclusively to roof mountings for solar panels, solar arrays and the like.

### Background to the Invention

Roof mounted solar panels for domestic or commercial buildings are known in the art. Solar panels can be of various types including photovoltaic cell panels which convert incident sunlight directly into electricity, or thermal collectors comprising arrays of evacuated tubes, which heat a fluid which is passed through a domestic hot water store where heat is transferred to a domestic hot water supply.

Each of these known types of solar panel generally comprise a flat panel structure which is mounted facing into the sun, typically at an angle to the horizontal. Typical solar panel dimensions can be in the range of area approximately 1.5 x 2.5 meters², and depth 5 to 12cm.

Documents FR 2369446, DE 19652568, DE102006041647 disclose a mounting kit, a beam, a mounting bracket and a method of installation of a mounting kit according to the preamble of claims 1, 5, 12 and 15.

In the United Kingdom and other regions having a temperate climate, pitched roofs are common, and it is known to mount solar panels approximately parallel to the main outer surface of a pitched roof.

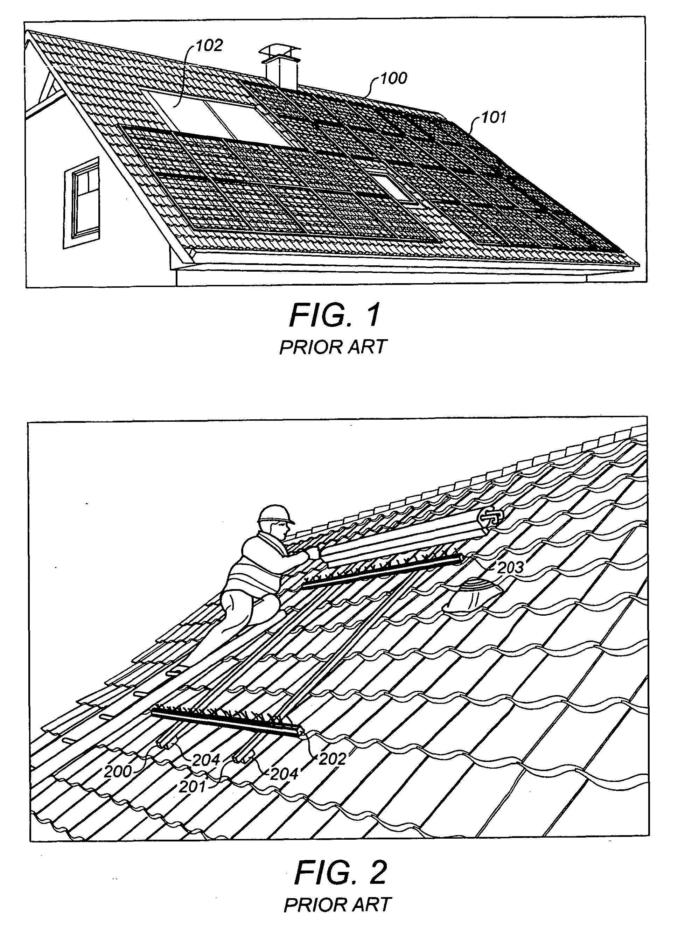

Referring to Figure 1 herein, there is illustrated schematically an installation of an array of known solar panels fixed to a pitched roof 100 of a house. In this example, the panels comprise a mixture of photovoltaic panels 101, and flat solar collector panels 102 having internal fluid tubes for heating domestic hot water. In this example, the photovoltaic panels are mounted parallel to and above a pitched tiled roof 100.

The cost and problems with installation of solar panels of all types is a major inhibitor to their widespread domestic and commercial adoption. Whilst new build housing can be more easily designed to incorporate solar panels on roofs, the majority of domestic housing and commercial buildings are legacy building stock already built. Consequently, to achieve wide spread adoption of solar panel technology requires fitting solar panels to existing roofs.

One common type of roof in western Europe is the tiled or slate pitched roof of know construction. Such roofs comprise a plurality of angled upright beams extending between a ridge and an eave, over which is positioned a waterproof membrane. On top of the water proof membrane are placed a plurality of horizontally spaced apart wooden battens, and on to those battens, are fixed roof tiles or slates, using roofing nails. Once constructed, fitting solar panels to such roofs usually requires two or more persons to have access to the outside of the roof via ladders or scaffolding.

There are generally two types of known installation which include (a) a flush fitting or "in roof" fitting and (b) externally mounted or "on roof".

In a flush "in roof" fitting installation as shown at 102 in Figure 1, the solar panels are fitted in place of roof tiles or slates, and form the outer covering of the roof. Retrospective fitting of flush mounted roof panels involves removal of a significant area of roof tiles or slates, fitting the roof panels to the roof structure, and making a weather tight seal using flashing between the edges of the solar panels, and adjacent tiles or slates.

For slate roofs, and / or tiled roofs of the Roman (Arabian) type tile as commonly used in southern Europe, one known "on roof" mounting method involves drilling through the slates directly into an underlying rafter, and applying an upright bolt mounting protruding from the slate, where a lower end of the bolt mounting is screwed into the underlying rafter. At least four such bolts are fixed into the roof, and a pair of parallel horizontal cross bars are attached to the protruding bolts, on to which the solar panel or solar array is mounted.

Using this method, usually only a small number of slates need to be removed and replaced, for each solar panel or solar array, typically four slates, one per bolt mounting. Additionally, further holes need to be drilled in the slate/ tile roof through which the pipe work or electric cables are passed into the roof void. A water tight and weather tight seal is made by including an annular rubber seal along the bolt which contacts the slate/ tile, and by applying a silicone sealant to the bolt and rubber seal at the place where it passes through the slate.

Another known method of installation of an external mounting ("on roof" mounting) for tiled roofs involves removing some of the tiles, attaching mounting brackets to the upright rafters or to horizontal cross beams / noggins joined between the rafters, replacing the tiles to leave the mounting brackets protruding from the tiled roof, and attaching a pair of upright beams between pairs of vertically spaced apart mounting brackets protruding from the roof. Across the pair of upright beams are fitted a pair of horizontal beams, forming a rectangle shape. Pipe connections or electrical cables are passed through holes in the roof, and must be made water tight and weather proof.

For solar collectors which are installed on a pitched roof it is normal to have some kind of connector or bracket which is lapped into the tiling, with the tiles on top so as to maintain the water tightness of the roof. That mounting has to accommodate different styles of roof tile, which can require different heights of the mounting rail on which to mount the collector, due to different tile depths

The amount of labor required to retro-fit solar panels or arrays and the difficulty of installation are a major component in the overall cost of a solar panel installation. The finished job must be waterproof and weather tight, reliable, robust and able to resist high winds, storms, extended hot sun light, snow, ice and all the usual weather conditions.

Referring to Figure 2 herein, there is illustrated schematically, a human operative in the final stages of fixing a flat array of solar tubes to a pitched tiled roof. The operative has already fixed a pair of upright rails 200, 201 parallel to the tiles, and has mounted a pair of cross spars 202, 203 and a tube manifold 204 horizontally across the rails. The rails 200, 201 are attached to the roof by a set of mountings 205 which pass underneath the tiles, and are secured to horizontal battens underneath the tiles. This involves an operative crawling up a ladder on the roof and removing part of a row of tiles.

Known mountings for external solar panel fixings rely on a pair of horizontal or upright rails, with one or more cross members, with the solar panel or solar array being mounted to the cross members. Not all installations use the upright rails, and the horizontal beams may be attached directly to the mounting brackets.

To complete the installation, holes need to be made in the flexible waterproof roof membrane, at positions adjacent to the mountings so that electrical cables and/or pipe work can be fed through the roof into the roof void, and the outer tiles need replacing to the roof. Where tiles have been damaged in removal, new tiles of a similar type need to be fitted. Where the electrical cables or pipe work are passed through the waterproof membrane, they need to be sealed around the edges of the holes to avoid water entering the roof void.

The solar panel can be fitted either to horizontal beams placed across the upright rails, or to the upright vertical rails, using bolts, clips, or other fixings.

Referring to Figure 3 herein, there is illustrated schematically installation of a known set of mounting brackets for mounting a solar panel on a pitched roof. Four mounting brackets and angle pieces as described in Figures 4 and 5 herein are fitted at corners of a rectangle on a pitched roof. This entails locally removing one or a plurality of tiles at the position of each mounting bracket.

Known mountings for external solar panel fixings rely on a pair of horizontal or upright rails, with one or more cross members, with the solar panel or solar array being mounted to the cross members.

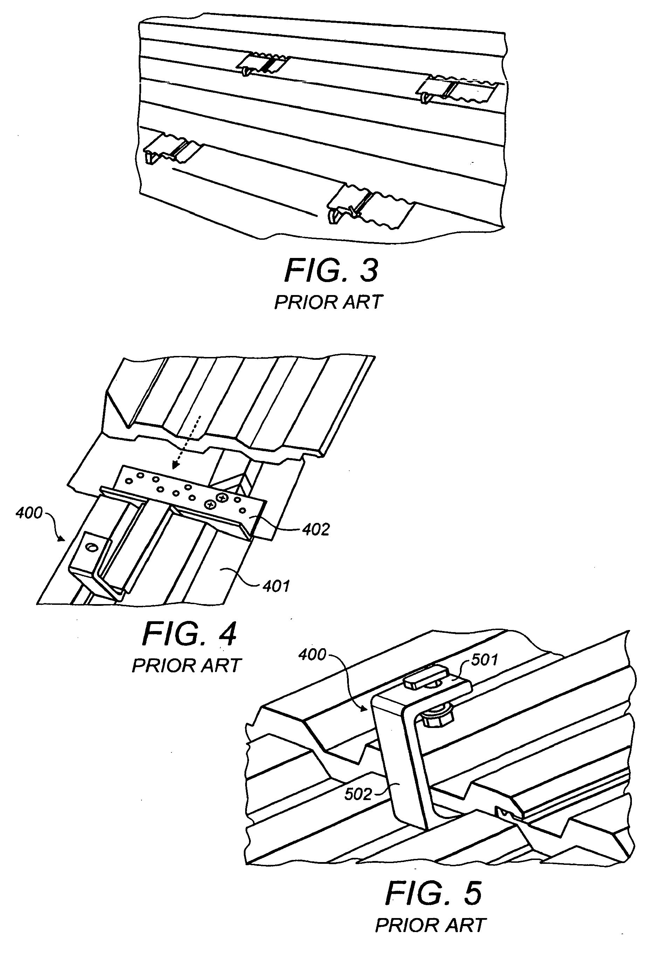

Referring to Figure 4 herein, there is illustrated schematically a mounting bracket and angle piece installed on a roof. The main length of mounting bracket 400 is positioned in a trough of a profiled tile 401, and a first end of the mounting bracket is bolted to an angle bracket 402. The angle bracket is screwed to an upright rafter of the roof structure or, where a rafter is inconveniently positioned to a horizontal noggin or cross beam fitted between adjacent rafters and of similar strength to the rafters, under the waterproof membrane. The mounting bracket could be attached to a roof with horizontally extending noggins, in which case the mounting bracket 400 and/or the angle plate 402 could be screwed to a horizontally extending noggin.

Once the mounting bracket and angle piece are in situ on the roof, one or more tiles, which have been removed, are replaced and cover over the angle piece 402 and a main length of the mounting bracket 400.

Referring to Figure 5 herein, there is illustrated schematically the mounting bracket 400 when installed on the pitched roof, and with the tiles replaced over the mounting bracket. The mounting bracket protrudes from underneath an overlapping tile, at its lower end and extends in the direction substantially perpendicular to a main plane of the roof. A bent over portion 501 forms a mounting position spaced apart from and above the roof, for mounting a rail or beam parallel to the roof, and on to which a solar panel, solar array or the like may be fitted. A pair of mounting brackets can be connected by an external horizontal beam, on to which a solar panel is mounted, or alternatively, a pair of mounting brackets with one positioned above the other on the roof can be connected by an upright rail, with a solar panel or solar array attached to a pair of such upright rails.

Connecting the horizontal or upright rails to the mounting bracket typically involves a "T" bolt, and tightening a nut as shown in Figure 5, using a spanner or socket.

The known mounting bracket provides that the underneath of the solar panel lies at a fixed distance from the upper surface of the tiles, due to the fixed distance of the upright portion 502 of the mounting bracket. Since different roofs have different types of profiled tile or slate, of varying thicknesses, the upright portion of the known mounting bracket must be high enough to accommodate all types of slate or tile which may be reasonably encountered, to avoid having a proliferation of different sized mounting brackets to suit different types of slate or tile.

Since roof installation involves human operatives working at height above the ground, there are health and safety issues and installation generally requires a risk assessment to be made prior to commencing work. It is an ongoing objective to make installation of solar panels safer, by minimizing the number of tools required when working at height, minimizing the number of components used on the roof, minimizing the size and weight of components which need to be carried on to a roof, and minimizing the amount of time which an installation operative needs to spend at height on a roof.

Further, mountings for on-roof mounted solar panels or arrays must be strong enough to bear the weight of snow. Typically every 100mm of snow fall will add up to 70kg of weight per 1m². The mountings must also be strong enough to withstand the maximum wind loadings on and underneath the solar panels or solar arrays, once they are installed.

### Summary of the Invention

According to a first aspect there is provided a mounting kit for a solar panel, solar array or the like, said mounting kit comprising at least one mounting bracket and at least one beam,
each said at least one beam comprises:
   a rigid elongate body portion;
   first engaging portion extending from said body portion and attached thereto;
   a second engaging portion facing opposite and spaced apart from said first engaging portion, said second engaging portion being attached to said body portion;
   wherein said second engaging portion is positioned in a fixed spatial relationship to said first engaging portion when no force is applied to said also beam; and
   said first and second engaging portions are capable of moving apart under applied force; and
each said at least one mounting bracket comprises one or a plurality of mounting parts, each said mounting part comprising:
   a head portion;
   a first engaging region positioned at a rear of said head portion; and
   a second engaging region positioned at a front of said head portion;
   said head portion being positioned between said first rearwardly positioned engaging portion and said second, forwardly positioned engaging portion;
   wherein said first engaging portion of said also beam is configured to engage said first engaging region of said mounting part; and
   said second engaging portion of said at least one beam is configured to engage said second engaging region of said at least one mounting part; and characterized in that
   engagement of said at least one beam to said at least one mounting part is effected by applying a rotational and translational movement of said at least one beam relative to said mounting part.

Preferably, said at least one beam and said at least one mounting are connectable to each other by applying a said rotational and/or translational movement in a direction transverse to a direction parallel to a main length of said at least one beam.

Preferably, engagement or disengagement of the beam from the mounting head may be achieved by applying sufficient force for the head portion of the mounting part to temporarily extend the distance between the first and second engaging portions of the beam to allow the head to pass between said first and second engaging portions.

Preferably, a said beam is configured to engage a pair of mounting parts of a corresponding respective pair of said mounting brackets, without the need for tools.

According to a second aspect there is provided a beam for mounting a solar panel, solar array or the like, said beam characterised by comprising:
a rigid elongate body portion;
first engaging portion extending from said body portion and attached thereto;
a second engaging portion facing opposite and spaced apart from said first engaging portion, said second engaging portion being attached to said body portion, wherein said second engaging portion is positioned in a fixed spatial relationship to said first engaging portion;
wherein said second engaging portion is capable of moving with respect to said body portion, such that a distance between said second engaging portion and said first engaging portion is capable of temporarily increasing under applied force; and
said second engaging portion returns to its original spaced apart relationship with respect to said first engaging portion once said applied force is removed, and characterized in that said first engaging portion comprises a curved surface which, in use is capable of acting as a bearing for rotation of said beam about an axis of rotation parallel to a main length direction of said beam.

Preferably said first and second engaging portions are capable of moving apart under applied force.

Preferably, said first engaging portion may comprise a peripheral protrusion adjacent to said curved surface.

In a preferred embodiment, the beam comprises a downwardly extending skirt attached to said rigid body portion;
said second engaging portion is positioned at a lower end of said skirt;
said skirt is capable of deforming with respect to said rigid body portion, such that a distance between said second engaging portion and said first engaging portion is capable of temporarily increasing under applied force; and
said downwardly extending skirt returns to its original spaced apart relationship with respect to said first engaging portion once said applied force is removed.

Said first engaging portion may comprise a curved engaging surface.

Preferably, said skirt is normally in fixed spatial relationship to the body of the beam and to the curved engaging surface of the beam when no force is applied to the engaging portions; and the skirt is capable of deforming relative to the curved engaging surface under a force applied between a lower end of said skirt and said curved surface.

Preferably , the skirt is capable of returning to its fixed spatial relationship with respect to said curved engaging surface once said force is removed.

Said second engaging portion may comprise a protruding ridge.

Preferably, the beam is adapted to be attachable to an external mounting by a rotational and/or translational movement under manipulation by the human hand and without the need for tools.

According to a third aspect, there is provided a mounting bracket for mounting a solar collector, solar array or the like said mounting bracket having at least one arm and comprising:
one or a plurality of mounting parts each comprising:
   a first engaging region at a rear of said als mounting part; and
   a second engaging region at a front of said als mounting part; characterized in that: said first engaging region comprises a curved surface capable of acting as a bearing surface for rotation of a beam about an axis of rotation which is transverse to a line passing through said first and second engaging region.

Preferably, the mounting bracket comprises:
a head portion; and
a neck portion;
wherein said head portion has a greater dimension than said neck portion;
said head portion comprising:
   said first engaging region positioned at a rear of said head portion;
   said second engaging region positioned at a front of said head portion; and
   said head portion being positioned between said first rearwardly positioned engaging portion and said second, forwardly positioned engaging portion.

Preferably, said head portion may comprise a substantially flat upper surface.

Preferably, said second engaging region may comprise a projecting lip.

According to a fourth aspect there is provided a method of installation of a mounting kit as previously described for a solar panel, solar array or the like, said method comprising:
installing a plurality of mounting brackets to a structure, such that at least a pair of said mounting brackets are aligned in a same orientation and opposite each other; and
attaching a beam to a mounting part of each said plurality of mounting brackets simultaneously, by moving said beam in a rotational and/or translational movement relative to said mounting parts.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates schematically a known installation of solar panels on a pitched roof, showing both "in roof" and "on roof" attachment of solar panels;
Figure 2 illustrates schematically installation of a known solar tube array in an "on roof" fitting using a known mounting kit;
Figure 3 illustrates schematically an installation of four known mounting brackets to a pitched roof;
Figure 4 illustrates schematically a completed installed known mounting bracket prior to placement of an overlapping roof tile;
Figure 5 illustrates schematically a finished installation of a known mounting bracket on a pitched tiled roof;

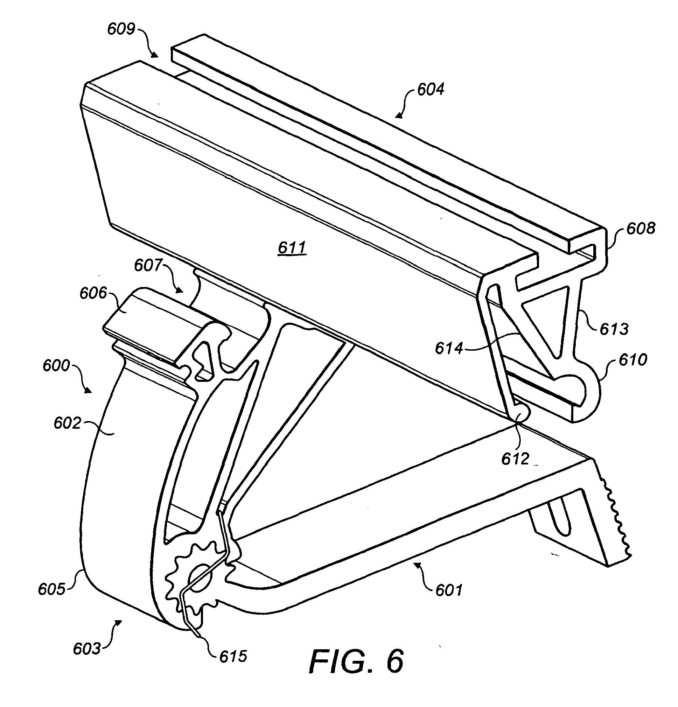

Figure 6 illustrates schematically novel roof mounting bracket according to a specific implementation presented herein for "on roof" mounting of a solar panel, solar array or the like;

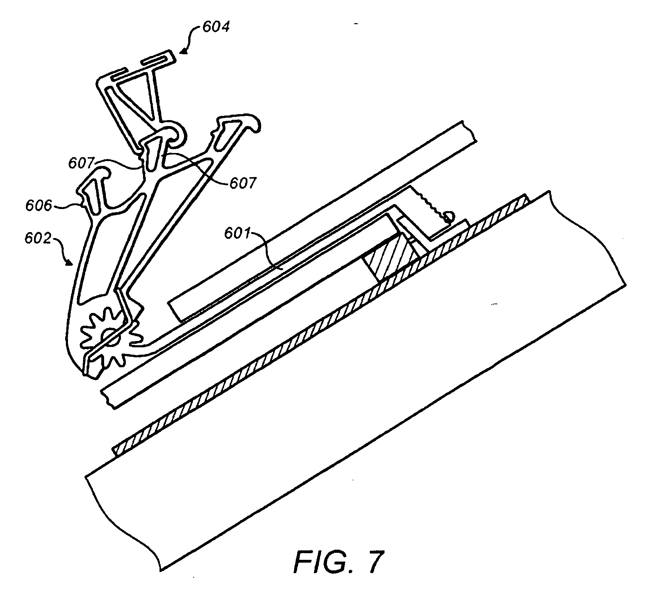

Figure 7 illustrates schematically the mounting bracket of Figure 6 in side view in a second orientation;

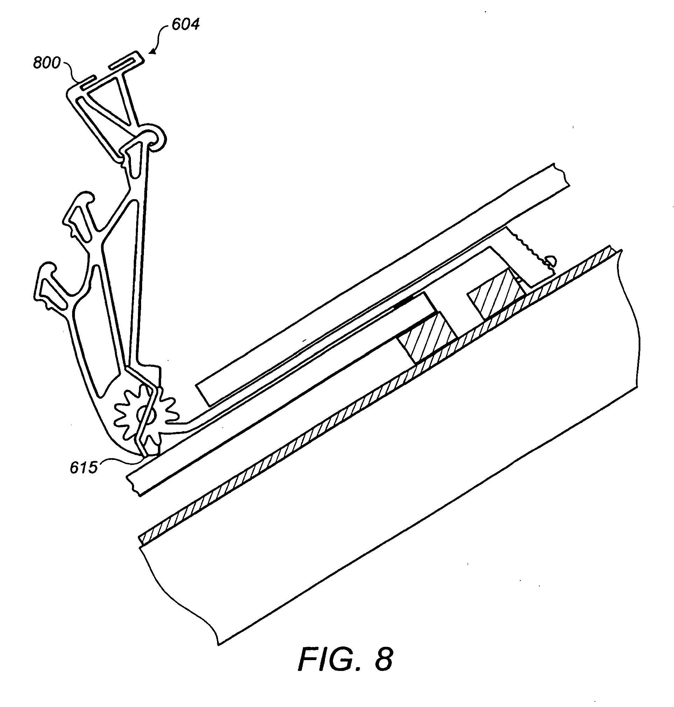

Figure 8 illustrates schematically the mounting bracket of Figure 6 in side view in a third orientation;

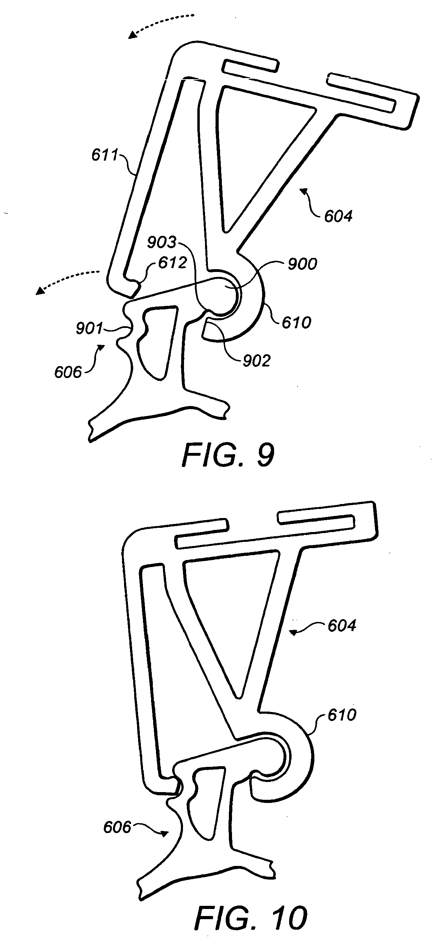

Figure 9 illustrates schematically in view from one side a first stage of fitment of the cross beam to a mounting bracket as shown in Figure 6 herein;
Figure 10 illustrates schematically in view from one end a second stage of fitment of the cross beam to a mounting bracket as shown in Figure 6 herein;

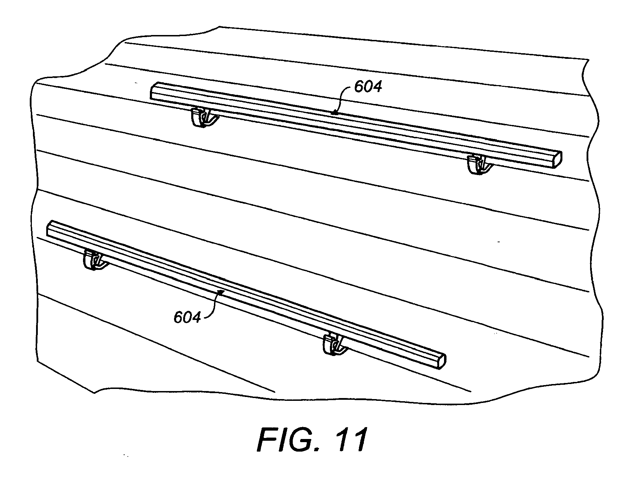

Figure 11 illustrates schematically in perspective view an installation of a mounting kit comprising four mounting brackets and two cross beams installed on a pitched tiled roof;

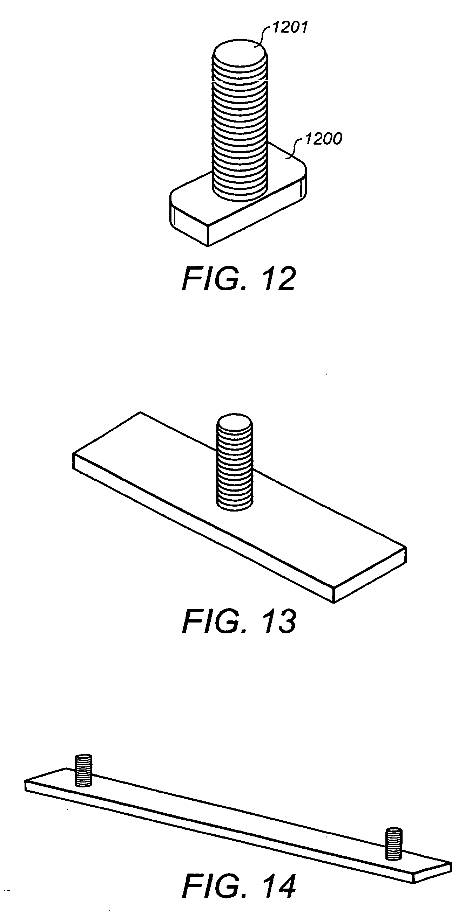

Figure 12 illustrates schematically a "T" bolt for attachment of a solar panel, solar array or the like to the cross beams.
Figure 13 illustrates schematically a plate mounted bolt for fitment of the solar panel, solar array or the like to the cross beams.
Figure 14 illustrates schematically a two bolt plate for fitment of a solar panel, solar array or the like to the cross beams.

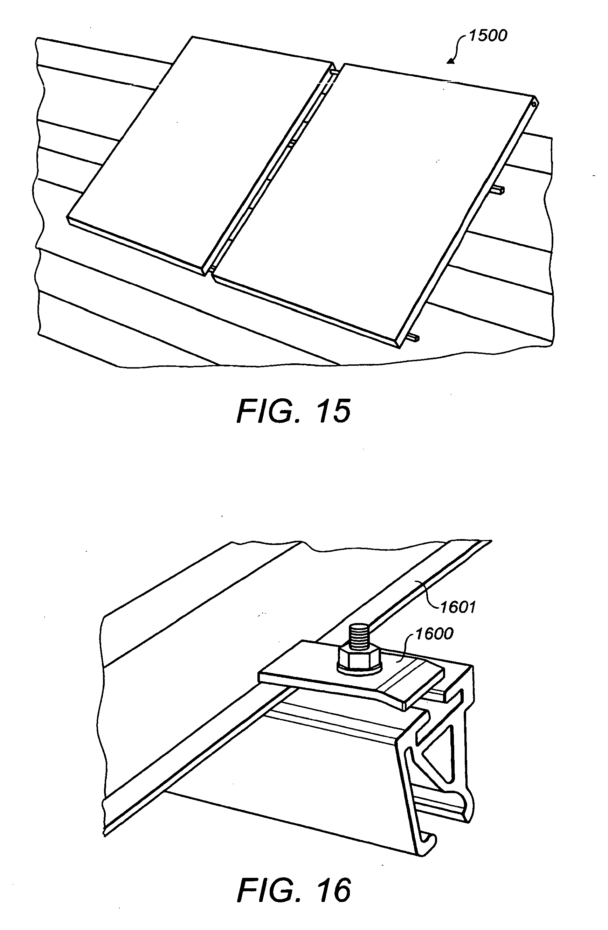

Figure 15 illustrates schematically a completed solar collector panel installation comprising a pair of solar collectors installed using a mounting kit as described herein; and
Figure 16 illustrates schematically one example of a clamp connection between a beam of a mounting kit described herein, and a conventional solar collector panel.

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

In this specification, the term "translational" means a movement in which one object is moved towards or away from another object, and may include, but not necessarily include, an element of rotation of one or both objects as part of the movement.

Referring to Figure 6 herein, there is illustrated schematically in perspective view a novel mounting for installation of a solar panel, solar array or the like to a pitched roof. The mounting comprises a mounting bracket 600 having a lower arm 601 and an upper arm 602, the upper and lower arms being connected to each other by an angularly adjustable connector portion 603 which locks the lower and upper arms in a fixed rigid angular relationship to each other; and a beam 604 for connecting across two or more such mounting brackets. Preferably, the lower and upper arms and the beam are formed of extruded aluminum, but in other embodiments may be formed of cast metal, cast plastics material or may be molded.

Lower arm 601 comprises an elongate arm having at a first end, a downwardly extending plate, extending in a direction transverse to a main direction of the lower arm; at a second end of the lower arm, a substantially circular splined connector mounting having a plurality of radially extending finger like protrusions in the form of gear wheel teeth; the connector mounting being connected to the main arm by a connecting portion which extends in a direction transverse to a main length direction of the main arm, with the effect of positioning the splined mounting off set and above a main plane of the mounting arm. The end plate may have a slot or aperture, through which a screw, nail or other fixing may be passed for fixing the end plate to an angle bracket fixed to an inclined roof.

Upper arm 602 comprises a lower end 605 having a concave arcuate connecting portion comprising a plurality of inwardly facing projections in the form of splines, teeth, or finger like projections, the plurality of projections forming a series of troughs and valleys arranged radially around a central axis and having an opposite profile to the protrusions of the connector mounting of the lower arm; extending from the substantially part circular connecting portion 605, a plurality of radially extending spokes; at a distal end of each said extending spoke is positioned a corresponding respective beam mounting part 606, 607, said plurality of beam mountings being spaced apart from each other in a direction parallel to a main plane bisecting the mounting bracket. In a preferred embodiment three such beam mountings are provided, spaced apart from each other.

A first mounting 606 is connected to a second beam mounting 607 by an intervening rigid connecting portion. Second beam mounting 607 is connected to a third beam mounting part by a second intervening connecting part.

Each mounting part comprises a head portion, having at its rear an overhanging engaging region for engaging with a rear engaging portion of the beam, and at the front of the head, a frontal engaging region for engaging with a front engaging portion of the beam. The overhanging engaging region comprises a convex curved surface which acts as a bearing about which the beam can be moved when the beam is attached to the mounting. At the front of the mounting, a protruding lip and recess are provided, over which the beam slides in order to engage with and connect to the mounting. The head portion is connected to a main body of the upper arm of the mounting bracket by a neck portion.

The lengths of the successive spokes are progressively longer from spoke to spoke, such that the position of the beam mountings are placed at successively increasing distances from the main central axis around which the concave connecting and engaging portion 603 is centered.

A detachable beam cross member 604, shown in perspective view in Figure 6, comprises an elongate beam, preferably of extruded material such as aluminum or other suitable metal, and having in cross section an upper portion 608 comprising a partially enclosed inverted "T" shaped channel 609 into which a bolt head, flat circular plate, square or rectangular plate or the like can be slid from one end; a lower engaging portion 610 having a curved engaging part for engaging an outer surface of a said beam mounting part 606, 607; and a forward engaging portion in the form of a skirt part 611 comprising a protrusion 612 positioned along a lower edge of the skirt, shaped for engaging a corresponding recess in a beam mounting part 606, 607 of the upper arm. The curved engaging portion 610 is spaced apart from the "T" slot channel 609 by a pair of angled bracing parts 613, 614 respectively, the bracing parts forming a "V" shape, and rigidly holding the upper portion 608 surrounding the slot 609 in spaced apart relationship to the curved engaging portion 610. The downwardly extending skirt portion 611, is positioned at a front edge of the beam, and at a lower end of the skirt is positioned the inwardly projecting engaging portion 612.

In use, lower arm 601 is positioned mostly underneath a roof tile, except for one end which protrudes from a lower end of the roof tile. Upper arm 602 protrudes upwardly, and over the roof tiles or slates.

A removable spring clip 615 fits around the connecting portion 603, keeping the splined mounting parts of the upper and lower arms in locked engagement.

The first component 601 and second component 602 are detachable from each other by removing the spring clip 615, and sliding the second part in a direction transverse to a main plane intersecting both the first component and the second component. When the first component is mounted in situ on a roof, the second component will be slid substantially horizontally with respect to the first component, such that the splined or channeled arm engaging part of the second component slides over the projecting splines or teeth of the arm engaging part of the first component.

The angular orientation of the two arms can be adjusted so as to adjust the height of the beam above the roof and to present either the first, second or third beam mounting for use in connecting the beam. In a first orientation, the upper arm is angled at a relatively shallow angle, such that the first mounting 606 is presented for attachment to the beam. In a second orientation, the second arm is mounted at a greater angle to the lower arm, compared with the first orientation, and such that the second mounting lug 607 is presented for mounting a beam. In a third orientation, the upper arm is mounted at an even greater angle with respect to the lower arm, and such that the third mounting is presented for connection of the beam. In the third orientation, the beam is positioned relatively further from the lower arm, and in the second and first orientations, the upper arm is successively lowered towards the lower arm.

To adjust the angular orientation of the second, upper arm component relative to the first, lower arm component, in a disengaged state, the second component is aligned such that the channeled engaging portion 605 of the second component lines up with the radially protruding teeth or projections of the engaging part of the first component, and sliding the second, upper arm component on to the first, lower arm component in a horizontal direction.

The two components are then locked to each other to prevent further movement in an axial direction, i.e. horizontally, by fitting the spring retaining clip 615 which extends from one side of the components across the second component, and down the other side of the two components, thereby preventing any relative movement in a direction transverse to a plane intersecting both components, and when the first component is fitted to a roof, restraining movement of the second component in a horizontal direction.

Referring to Figure 7 herein, there is illustrated schematically in view from one side, the mounting bracket of Figures 5 and 6 in the second orientation, where the beam 604 is mounted at a second distance from a main outer surface of the roof. In the second configuration, the second arm component 602 is oriented at a second angle in a vertical plane with respect to the first arm component, and positions the middle mounting lug 607 at a second height above the lower arm 601 of the first component, such that the beam 604 is positioned with its flat upper surface aligned substantially parallel with a main outer plane of the roof.

Referring to Figure 8 herein, there is illustrated schematically the mounting in a third orientation, in which the upper arm component makes a third angle in the vertical plane relative to the lower arm component. The upper and lower arm components are locked to each other in a direction transverse to the vertical plane and prevented from disengaging, by retaining spring 615.

In the third orientation, the beam 604 engages the third, rearward most mounting lug, which is positioned at a third distance from lower elongate arm of the first component. An upper substantially flat surface 800 of the beam lies substantially in a plane parallel to a main plane of the roof, for mounting an underside of a solar panel, solar array or the like, substantially parallel to the outer surface of the roof and spaced apart from the roof.

There will now be described a method of installation of the mounting bracket on a tiled roof.

One or more roof tiles are removed using conventional roofing techniques. The lower arm of the mounting bracket is bolted to a length of angle bracket, and the angle bracket may be screwed or otherwise fixed to a rafter or cross beam comprising part of the roof structure. Where the roof is fitted with a profiled tile type the lower arm of the mounting bracket may be situated in a trough or valley of the tile. Once secured, the tile which has been removed may be slid back over the lower tile, over which the lower arm component is positioned, so that a lower portion of the upper tile overlaps an upper portion of the lower tile, and overlaps the lower arm. The splined connecting portion of the lower arm component protrudes from underneath the overlapping tile, and is raised above the upper surface of the lower tile over which it is positioned, due to the angled connecting portion which extends at an angle in the range 30° to 45° to a main length of the lower arm, and serves to rigidly hold the splined mounting raised above the underlying tile. The length and angle of the splined connecting portion can be varied by design, such that the splined mounting portion is raised above the upper peaks of the majority of profiled tile types which are likely to be found on the market place, so that there is sufficient room for the lower end of the upper arm component to be slid horizontally on to the splined shaft of the lower arm when the lower arm component is installed on a roof with the tiles replaced. This thereby permits adjustment of the angle of the upper arm after installation of the lower arm, without the need to remove the lower arms from the roof or remove any further tiles.

An intermediate plastic moulding may be placed between the upper surface of the trough of the tile, and the underneath of the lower arm in order to seat the lower arm into the trough snugly, and to distribute the weight of the arm uniformly on the tile, to avoid the arm rattling, or cracking the underlying tile. The splined engaging portion is held sufficiently high over the adjacent peaks of the underlying tile profile, so as to allow enough room for the lower end of the upper arm to be slid side ways onto the engaging portion.

The angle with which the upper arm component 602 forms with the lower arm component 601 is dictated by the engagement of the lower end of the upper arm with the projecting engaging portion of the lower arm. Since the concave inner surface of the engaging portion of the upper arm has an opposite shaped engaging surface to the engaging surface of the convex engaging portion of the lower arm, and since the engaging portion of the lower arm comprises a plurality of radially outwardly extending protrusions, in the form of splines or gear like teeth, the upper arm can be mounted to the lower arm over a range of predetermined discrete angles dictated by the pitch between the peaks and troughs of the engaging surfaces of the engaging portion of the upper arm, and the engaging portion of the lower arm. To adjust the angle of the upper arm with respect to the lower arm, the upper arm is slid horizontally along the teeth of the engaging part of the lower arm, rotated slightly to align at a different angle, and then slid back over the engaging portion of the lower arm. For this operation, the retaining spring 615 needs to be removed.

Each of the first to third beam mounting lugs respectively are positioned at progressively further distances away from a central axis at the centre of the engaging portion of the upper arm, so that as the upper arm is adjusted angularly with respect to the lower arm, the position of an upper mounting surface on the beam mounting part relative to the position of the central axis of the splined engaging component of the upper arm is varied, thereby enabling variation of the height of the beam 604 relative to the underlying roof in a series of discrete height steps.

In an installation of four such mounting brackets on a roof arranged at corners of a rectangle, typically all four mounting brackets would be adjusted to the same angle as each other, so that all four brackets present the same, first, second or third mounting lug for attachment of a pair of cross beams, on to which the solar panel, array or the like is fitted, so that the panel or array can be mounted at a choice of heights above the underlying roof structure, to accommodate different sized tiles or different heights of profile of tile, depending upon the particular roof structure and installation requirements.

Referring to Figure 9 herein, there is illustrated schematically in view from one end of beam 604, fitment of the cross beam to a mounting lug 606. The cross beam is fitted to a plurality of mounting lugs 606 of a plurality of mounting brackets arranged in a line horizontally along the roof. Typically, the cross beam 604 may be mounted across a pair of horizontally spaced apart mounting brackets. Each mounting bracket is oriented with its upper arm at the same angle to its lower arm, that is, the orientation of the upper arm to the lower arm is at the same angle, and the engaging portions are engaged along the same orientation of splines on each mounting bracket. In this case, the foremost mounting lug 606 is selected. The beam 604 is fitted to a plurality of mounting brackets at the same time in a single action by an operative.

To fit the beam an operator places the cup shaped recess of the curved engaging portion 610 of the beam over the projecting rearwardly facing overhanging ends of the mounting lugs 606. The forward downwardly extending skirt portion 611 rests upon a substantially flat upper surface of the mounting lug 606. The distance between the concave inner surface of the cup shaped curved engaging portion 610, and the projecting engaging portion 612 of the downwardly extending skirt is such that the upper part of the mounting lug 606 will not fit into place without rotational force being exerted on the beam in the direction shown arrowed in Figure 9. This torque has the effect of slightly bending the downwardly extending skirt 611 in a forward direction, allowing the lower engaging portion 612 to slide over the forward lip portion of the mounting lug, and engaging in an elongate recess or trough 901 provided at the front face of the mounting lug 606.

An upwardly extending elongate protruding lip 902 on a lower part of the curved engaging portion 610 engages in a recess 903 positioned in the underside of the overhanging rearward portion 900 of the mounting lug, so that the mounting lug 606 is positioned between the inwardly projecting engaging portion 612 of the skirt 611, and the cupped portion of the curved engaging portion 610 of the beam.

The material strength, topography, geometry and tolerances of the elongate beam 604 and the mounting lug 606 are designed such that under the force of a human hand, the beam 604 can be "snapped" into place by rotating the beam about the rearward portion 900 of the mounting lug, such that the beam then clicks into place, and is rigidly held to the mounting lug. Engagement of the beam to said mounting part is effected by applying a rotational and translational movement of said beam relative to said mounting and such that the first and second engaging portions of the beam engage with the first and second engaging regions of the head of the mounting lug. Once engaged with each other the components are effectively locked to each other in fixed spatial relationship to each other, held together by the friction between the engaging parts. Because the head is of wider maximum dimension than the minimum distance between the first and second engaging portions of the beam, when no force is applied to the beam to urge the engaging parts of the beam apart, then the beam will not come off the head unless sufficient force is applied to the beam to increase the normal default separation distance between of the engaging portions of the beam.

Referring to Figure 10 herein, there is illustrated schematically in view from one end of beam 604, the beam which has been clipped into place on a pair of mounting lugs 606 of a pair of mounting brackets. The material strength, topography and tolerances of the arcuate engaging portion 610, the downwardly extending skirt 611 and the lip and recesses on the mounting lug 606 are designed and engineered such that the beam stays retained to the mounting lugs 606 even under conditions of high wind loading on solar panels or arrays mounted to the beam, and under conditions of freezing of the components, or heating up of the components in direct sun light. The amount of force between the skirt portion 611 and the curved engaging portion 610 of the beams, and the friction of the materials used are such that no significant movement in the horizontal direction along a main length of the beam will occur under normal wind loadings, preventing the beam from sliding side ways relative to the mounting brackets. The beam is therefore rigidly mounted and movement is prevented in all directions in the plane of the upper surface 800 of the beam.

The mounting beam 604 can be fitted to the mounting lugs 606 without the need for any tools, and using only the force of human strength in twisting the beam onto the mountings 606. The skirt is normally in fixed spatial relationship to the body of the beam and to the curved engaging portion 610 of the beam, when no force is applied to the engaging portions, but is capable of deforming enough to allow the head of the mounting lug to snap into place when force is applied to pull the beam onto the mounting lug. Once in place on the head of the mounting lug, the skirt substantially resumes its normal fixed spatial relationship to the lower engaging portion 610 at the rear of the beam.

When the beam is fitted to the mounting lug 606, it can be removed again by a sharp push or twist in the opposite direction by a person, causing the beam to rotate about its longitudinal axis, and move relative to the mounting, so that the skirt deforms outwardly slightly such that the lower elongate engaging portion 612 at the lower end of the skirt passes over the forward lip adjacent the trough 901. Separation of the beam from the mounting head may be achieved by applying a movement of the beam relative to the head which involves a rotational element, and sufficient force for the protrusions on the head to temporarily extend the distance between the skirt and the rear engaging portion of the beam enough to allow the head to pass between those parts.

Therefore, if during installation an operative clicks the beam into place at the incorrect distance, the beam can be pushed to disconnect from the mountings, moved along horizontally and twisted onto the mounting lugs again by the person without the need for any tools.

Referring to Figure 11 herein, there is illustrated schematically, a completed installation of a novel roof mounting kit for a solar panel, solar array or the like as presented herein. Four mounting brackets are arranged at the corners of a rectangle on the roof, installed as described herein. A pair of beams are fixed to the mounting brackets as described with reference to Figures 9 and 10 herein. The finished mounting kit is now ready for direct attachment of a solar panel, solar array or the like, using a selection of "T" bolts, or flat plate connectors which are slid into the "T" shaped channels on the upper part of the beams 604. The solar panel, array or the like is bolted directly to the beams.

Referring to Figures 12 to 14 herein, there is illustrated schematically a selection of known bolts and connecting plates, suitable for sliding into an inverted "T" shaped channel 609 on top of the beam 604.

The "T" shaped bolt shown in Figure 12 may be inserted into the slot aperture on top of the beam and then twisted in order to lock it into place. A lower plate 1200 prevents the bolt from coming out of the "T" shaped channel of the beam, when the plate is rotated across the width of the "T" shaped channel, leaving an upward screw thread 1201 projecting out of the "T" shaped slot.

In the case of the plates of Figures 13 and 14, these plates are slid along the "T" shaped slot in the beam from one end of the beam, manually without the need for tools, leaving either one or two screw threads projecting from the upper slot as appropriate.

Referring to Figure 15 herein, there is illustrated schematically in perspective view, a completed solar collector panel installation, installed using the mounting kit as described with reference to Figures 6 to 11 herein, and using ancilliary components selected from those shown in Figures 12 to 14 herein.

A solar collector panel 1500 is bolted directly to the upper surfaces 800 of the upper and lower beams, each of which are mounted on a plurality of mounting brackets as described in Figure 6.

Referring to figure 16 herein, there is shown schematically a detail of one type of connection between a beam and a solar collector, in which a clamp 1600 retains a horizontal edge 1601 of a solar collector panel to the beam. This type of attachment allows the solar collector to be adjusted upwardly or downwardly relative to the horizontal cross beams.

In other embodiments, a solar collector panel may be provided with metal tabs having a through-hole in which case, the metal tabs on the sides of the solar collector can be bolted directly to the screw threads protruding from the "T" slots on upper and lower parallel beams. Where a solar collector panel is not provided with mounting tabs, the solar collector can be attached to the beams using "S" shaped clamps or straight or angled clamps, which clamp the solar collector to the beams and are retained to the beams by fixing a retaining nut such an aero nut to the threads protruding from the "T" shaped slots in the beams.

In either case, once the solar collector is rigidly attached to the beams, this prevents the beams from moving in a rotational or translational movement or a combination of translational and rotational movements about an axis extending along a main length of the beam, and therefore prevents the beams from rotating off the mounting lugs 606, 607 under wind loading. In the embodiments shown, the beams cannot detach from the mountings once a solar panel or solar array has been attached across a pair of fitted beams, because the panel or array prevents the beams from rotating about a direction parallel to their main lengths.

A method of mounting a solar collector, solar array or the like to a pitched roof having a tiled or slated covering will now be described.

A human operator first performs a health and safety assessment, and collects together the required tools, ladders, scaffolding etc to access the pitched roof.

The operator climbs up onto the roof and removes four or more tiles, to expose four or more mounting positions for mounting brackets as shown in Figure 6 herein.

Access needs to be provided for pipes and cables to pass through the roof structure.

Solar fluid carrying pipes and/or electric cables are placed through an aperture made in the water proof membrane so as to pass through the roof and into an underlying roof cavity.

As with the known roof mounting kits, the pipe work or electricity cables from the solar panel or array need to be fed through the roof to connect to the power supply or heating system of the building or house, in the conventional manner.

At each of the four mounting positions the operative attaches the lower arms to the rafters and/or cross beams of the roof structure using an angled bracket, and then replaces the tiles over the lower arms of the mounting brackets.

Depending upon the height of the tiles and the depth of their undulating profile, the operative adjusts the upper arms so that, for each bracket, the same respective mounting lug is presented for fitment of a beam, as described herein with reference to Figure 6. The operative then has four mounting brackets fitted, each in an angular orientation such that either the foremost, middle or rearmost mounting lug of each bracket is presented at the same height above a main plane of the outer surface of the roof, and four mounting lugs of the same position on the upper arms are all presented and aligned substantially in a same horizontal plane as each other.

The operative fits the cross beams 604, one between the lower two mounting brackets and one between the upper two brackets, so as to have two substantially parallel beams, each at substantially the same distance from the tiled surface of the roof, and with the upper surfaces 800 of the beams aligned substantially in a same plane.

Each beam is fitted by engaging the cupped lower engaging portion 610 of the beam underneath a rearward facing edge or lip 900 of the mounting lugs, and then twisting the beam in a predominantly rotational movement relative to a main central axis of the beam and relative to the mounting lugs 606, 607, so that the front skirt 611 deforms slightly and a lower part of the skirt clicks over the forward lip on the mounting lug 606, 607 into the engaging recesses 901, so as to clip firmly into place as shown with reference to Figures 9 and 10 herein.

The operative then checks that the two beams are fitted in alignment with each other i.e. the ends of the beams start and finish substantially in the same place and are centered correctly in the horizontal direction relative to the mounting brackets and line up with each other. In one embodiment, if one of the beams is slightly mis-aligned, the operative can twist the beam in the reverse direction to that shown arrowed in Figure 9, using a twisting motion applied by both hands while kneeling on the roof, move the beam over slightly again, and then twist back in the opposite rotation in order to clip the beam back onto the mounting lugs. The beam can be clipped and unclipped by application of force from a single human arms, so that no tools are required for attaching the beam to the lugs, when on the roof. The amount of force required can be adjusted by designing the relative dimensions of the lugs and the beam, such that when the operative is up on the roof, and kneeling on the roof, holding the beam either with one arm or both arms and using the operatives legs and/or other arm to steady herself on the roof, the operative will not need to apply so much force as to jeopardize her balance or grip on the roof, but rather the amount of force is such that it can be applied using one arm of an average strength adult person to attach or detach the beam from the mounting lugs.

In an alternative embodiment, the connection of the beam to the mounting may be designed to fit as a one way operation only, and the beam is designed not to release from the mounting once attached.

The operative slides the connecting plates or "T" bolts as shown in Figures 12 to 14 into the "T" shaped slots of the beam. This may be done before attaching the beams, if the ends of the beams are taped over to prevent them sliding out of the "T" shaped channels, or can be done once the beam is in situ on the roof.

The operative places the solar collector onto the beams, and depending upon the design of the solar collector, either places the bolts into the existing mounting tabs or brackets on the solar collector, or attaches the solar collector to the beam using "S" shaped or other appropriately shaped clamps, with the clamps being attached to the protruding threads of the bolts or plates positioned in the "T" shaped slots of the beams. Washers and nuts are placed over the protruding bolts to secure the collector or clamps to the beams and the whole assembly is made rigid by tightening up the nuts to the protruding threads on the beam.

The pipe work and/or electric cables are fitted to the solar collector in conventional manner.

It will be appreciated by the skilled person, that whilst the embodiments described herein are by way of the best mode of carrying out the invention presently known to the inventors, the described specific features are open to variation without departing from the scope of the invention. Other embodiments may include mounting lugs which are oriented 180° in the opposite direction relative to the upper mounting arms, and so that the beam may be fitted with the skirt presented towards the rear of the mounting bracket. The precise shape of the mounting lugs and the precise cross sectional shape of the beam may be subject to variations of dimensions, material thicknesses and design tolerances within the scope of the present invention.

## Claims

1. A mounting kit for a solar panel, solar array, said mounting kit comprising at least one mounting bracket (600) and at least one beam (604),
each said at least one beam (604) comprises:
a rigid elongate body portion;
a first engaging portion (610) extending from said body portion and attached thereto;
a second engaging portion (612) facing opposite and spaced apart from said first engaging portion (610), said second engaging portion (612) being attached to said body portion;
wherein said second engaging portion (612) is positioned in a fixed spatial relationship to said first engaging portion (610) when no force is applied to said at least one beam; and
said first and second engaging portions (610, 612) are capable of moving apart under applied force; and
each said at least one mounting bracket comprises one or a plurality of mounting parts, each mounting part comprising:
a head portion;
a first engaging region (900) positioned at a rear of said head portion; and
a second engaging region (901) positioned at a front of said head portion;
said head portion being positioned between said first rearwardly positioned engaging portion and said second, forwardly positioned engaging portion;
wherein said first engaging portion (610) of said at least one beam (604) is configured to engage said first engaging region (900) of said at least one mounting part; and
said second engaging portion (612) of said at least one beam (604) is configured to engage said second engaging region (901) of said at least one mounting part; and **characterized in that** the at least one beam (604) is configured to engage
to said at least one mounting part by applying a rotational and translational movement of said at least one beam (604) relative to said mounting part.

2. The mounting kit as claimed in claim 1, wherein said at least one beam (604) and said at least one mounting part are connectable to each other by applying a said rotational and translational movement in a direction transverse to a direction parallel to a main length of said at least one beam (604).

3. The mounting kit as claimed in claim 1 or 2, configured such that engagement or disengagement of the at least one beam (604) from the mounting head may be achieved by applying sufficient force for the head portion of the at least one mounting part to temporarily extend the distance between the first and second engaging portions of the at least one beam to allow the head to pass between said first and second engaging portions (610, 612).

4. The mounting kit as claimed in any one of the preceding claims, wherein said at least one beam (604) is configured to engage a pair of mounting parts of a corresponding respective pair of said at least one mounting brackets (600), without the need for tools.

5. A beam (604) for mounting a solar panel, solar array, said beam comprising:
a rigid elongate body portion;
first engaging portion (610) extending from said body portion and attached thereto;
a second engaging portion (612) facing opposite and spaced apart from said first engaging portion (610), said second engaging portion (612) being attached to said body portion, wherein said second engaging portion (612) is positioned in a fixed spatial relationship to said first engaging portion (610);
wherein said second engaging portion (612) is capable of moving with respect to said body portion, such that a distance between said second engaging portion (612) and said first engaging portion (610) is capable of temporarily increasing under applied force; and
said second engaging portion (612) returns to its original spaced apart relationship with respect to said first engaging portion (610) once said applied force is removed, and **characterized in that**
said first engaging portion (610) comprises a curved surface which, in use is capable of acting as a bearing for rotation of said beam (604) about an axis of rotation parallel to a main length direction of said beam.

6. The beam as claimed in claim 5, wherein said first and second engaging portions (610, 612) are capable of moving apart under applied force.

7. The beam as claimed in claim 6, wherein said first engaging portion (610) comprises a peripheral protrusion adjacent said curved surface.

8. The beam (604) as claimed in any one of claims 5 to 7, wherein:
said beam (604) comprises a downwardly extending skirt (611) attached to said rigid body portion;
said second engaging portion is positioned at a lower end of said skirt (611);
said skirt (611) is capable of deforming with respect to said rigid body portion, such that a distance between said second engaging portion and said first engaging portion (610) is capable of temporarily increasing under applied force; and
said downwardly extending skirt (611) returns to its original spaced apart relationship with respect to said first engaging portion (610) once said applied force is removed.

9. The beam (604) as claimed in claim 8, wherein:
said first engaging portion (610) comprises a curved engaging surface;
said skirt (611) is normally in fixed spatial relationship to the body of the beam and to the curved engaging surface of the beam when no force is applied to the engaging portions; and
the skirt (611) is capable of deforming relative to the curved engaging surface under a force applied between a lower end of said skirt (611) and said curved surface; and
the skirt (611) is capable of returning to its fixed spatial relationship with respect to said curved engaging surface once said force is removed.

10. The beam (604) as claimed in any one of claims 5 to 9, wherein said second engaging portion (612) comprises a protruding ridge.

11. The beam (604) as claimed in any one of claims 5 to 10, adapted to be attachable to an external mounting by a rotational and translational movement under manipulation by the human hand and without the need for tools.

12. A mounting bracket (600) for mounting a solar collector, solar array, said mounting bracket having at least one arm (901), and comprising:
one or a plurality of mounting parts each comprising:
a first engaging region (610) at a rear of said at least one mounting part; and
a second engaging region (612) at a front of said at least one mounting part;
**characterised in that**:
said first engaging region comprises a curved surface capable of acting as a bearing surface for rotation of a beam about an axis of rotation which is transverse to a line passing through said first and second engaging regions.

13. The mounting bracket (600) as claimed in claim 12, comprising:
a head portion; and
a neck portion;
wherein said head portion has a greater dimension than said neck portion;
said head portion comprising:
said first engaging region (900) positioned at a rear of said head portion;
said second engaging region (901) positioned at a front of said head portion; and
said head portion being positioned between said first rearwardly positioned engaging portion and said second, forwardly positioned engaging portion.

14. The mounting bracket as claimed in claim 13, wherein:
said head portion comprises a substantially flat upper surface; and
said second engaging region comprises a projecting lip (902).

15. A method of installation of a mounting kit according to any one of claims 1 to 4 for a solar panel, solar array, said method comprising:
installing a plurality of mounting brackets (600) to a structure, such that at least a pair of said mounting brackets (600) are aligned in a same orientation and opposite each other; and
attaching a beam (604) to a mounting part of each said plurality of mounting brackets (600) simultaneously, by moving said beam (604) in a translational and rotational movement relative to said mounting parts.

## Patentansprüche

1. Eine Befestigung für einen Sonnenkollektor, ein Sonnenarray oder dergleichen, die Befestigung umfassend mindestens einen Befestigungshalter (600) und mindestens einen Träger (604), **dadurch gekennzeichnet, dass**
jeder von den mindestens einen Trägern umfasst:
ein rigides verlängertes Körperteil;
einen ersten Eingriffsbereich, der sich von dem Körperteil erstreckt und zu dem Körperteil befestigt ist;
einen zweiten gegenüberstehenden Eingriffsbereich, der von dem ersten Eingriffsbereich getrennt ist, der zweite Eingriffsbereich zu dem Körperteil befestigt ist;
wobei der zweite Eingriffsbereich in einer festgelegten räumlichen Beziehung zu dem ersten Eingriffsbereich positioniert ist, wenn keine Kraft an dem Träger angewendet ist; und
der erste und der zweite Eingriffsbereich fähig sind, unter angewandter Kraft, auseinander zu bewegen; und
jeder von den mindestens einen Befestigungshaltern eine Vielzahl von Befestigungsteilen umfasst, jeder von den Befestigungsteilen umfassend:
einen Kopfbereich;
einen ersten Eingriffsbereich an einer Rückseite des Kopfbereichs; und
einen zweiten Eingriffsbereich an einer Vorderseite des Kopfbereichs;
der Kopfbereich sich zwischen dem ersten Rückeingriffsbereich und dem zweiten Vordereingriffsbereich befindet;
wobei der erste Eingriffsbereich des Trägers konfiguriert ist, den ersten Eingriffsbereich des Befestigungshalters anzustellen; und
der zweite Eingriffsbereich des mindestens einen Trägers konfiguriert ist, den zweiten Eingriffsbereich des mindestens einen Befestigungshalters anzustellen; und
Einstellung des mindestens einen Trägers zu dem mindestens einen Befestigungshalter durch Anwendung einer Rotations- und Translatorisch-bewegung des mindestens einen Trägers relativ zu dem mindestens einen Befestigungshalter.

2. Eine Befestigung nach Anspruch 1, wobei der mindestens eine Träger und der mindestens eine Halter miteinander durch Anwendung der Rotations- und/oder Translatorisch-bewegung in der Richtung, die quer zu der Richtung, die parallel mit der haupte Länge des mindestens einen Trägers ist, verbindbar sind.

3. Eine Befestigung nach Anspruch 1 oder 2, konfiguriert so dass Einstellung oder Losgelöstsein des mindestens einen Trägers von dem Befestigungshalter so ausgeführt werden kann, dass eine ausreichende Kraft an dem Kopfbereich des mindestens einen Befestigungshalters angewendet ist, in order den Abstand zwischen dem ersten und dem zweiten Eingriffsbereich des mindestend einen Trägers zu vergrössern und den Kopf zwischen dem ersten und dem zweiten Eingriffsbereich passieren lassen.

4. Eine Befestigung nach einem der vorhergehenden Ansprüche, wobei der mindestens eine Träger konfiguriert ist, ein Paar von Befestigungsteilen von entsprechenden Paaren von den mindestens einen Befestigungshaltern, ohne Werkzeugsbedarf, anzustellen.

5. Ein Träger (604) für Befestigung eines Sonnenkollektors, eines Sonnenarray oder dergleichen, der Träger **gekennzeichnet durch** Umfassen:
eines rigiden verlängerten Körperteiles;
eines ersten Eingriffsbereichs, der sich von dem Körperteil erstreckt und zu dem Körperteil befestigt ist;
einen zweiten gegenüberstehenden Eingriffsbereich, der von dem ersten Eingriffsbereich getrennt ist, der zweite Eingriffsbereich zu dem Körperteil befestigt ist, wobei der zweite Eingriffsbereich in einer festgelegten räumlichen Beziehung zu dem ersten Eingriffsbereich positioniert ist;
wobei der zweite Eingriffsbereich fähig ist, mit Bezug auf das Körperteil zu bewegen, so dass der Abstand zwischen dem ersten Eingriffsbereich und dem zweiten Eingriffsbereich fähig ist, sich zeitweilig unter angewandter Kraft zu vergrössern; und
der zweite Eingriffsbereich zu seiner Ursprungs-getrennten Beziehung mit Bezug auf den ersten Eingriffsberich rückspringt, wenn die angewandte Kraft abgelöst is, und
wobei der erste Eingriffsbereich eine gekrümmte Oberfläche umfasst, die im Einsatz fähig ist, als ein Lager für Rotation des Trägers um die Rotationsachse parallel zu der Hauptlänge-richtung des Trägers, zu wirken.

6. Der Träger nach Anspruch 5, wobei der erste Eingriffsbereich und der zweite Eingriffsbereich fähig sind, auseinander unter angewandter Kraft sich bewegen.

7. Der Träger nach Anspruch 6, wobei der erste Eingriffsbereich eine periphere Vorsprung umfasst, die der gekrümmten Oberfläche anliegend ist.

8. Der Träger nach einem der Ansprüche 5 bis 7, wobei:
der Träger einen Abwärtsschaft umfasst, der zu dem rigiden Körperteil befestigt ist;
der zweite Eingriffsbereich sich an einem Unterende des Schafts befindet;
der Schaft fähig ist, mit Bezug auf das rigiden Körperteil sich zu verformen, so dass der Abstand zwischen dem zweiten Eingriffsbereich und dem ersten Eingriffsbereich fähig ist, sich zeitweilig unter angewandter Kraft zu vergrössern; und
der Abwärtsschaft zu seiner Ursprungs-getrennten Beziehung mit Bezug auf den ersten Eingriffsbereich rückspringt, wenn die angewandte Kraft abgelöst ist.

9. Der Träger nach Anspruch 8, wobei:
der erste Eingriffsbereich eine gekrümmte Eingriffsoberfläche umfasst;
der Schaft fähig ist, mit Bezug auf die gekrümmte Eingriffsoberfläche sich zu verformen, unter Kraft angewendet zwischen einem Unterende des Schafts und der gekrümmten Oberfläche; und
der Schaft fähig ist, zu seiner festgelegten räumlichen Beziehung mit Bezug auf die gekrümmte Eingriffsoberfläche rückzuspringen, wenn die angewandte Kraft abgelöst ist.

10. Der Träger nach einem der Ansprüche 5 bis 9, wobei der zweite Eingriffsbereich einen vorstehenden First umfasst.

11. Der Träger nach einem der Ansprüche 5 bis 10, angepasst werden zu einem Aussenbefestigung durch eine Rotations- und Translatorisch-bewegung unter Manipulation mit der menschlichen Hand und ohne Werkzeugsbedarf, befestigbar zu sein.

12. Ein Befestigungshalter (600) für Befestigung eines Sonnenkollektors, eines Sonnenarray oder dergleichen, der Befestigungshalter umfassend mindestens einen Arm (901), und umfassend:
ein oder eine Vielzahl von Befestigungsteilen, jedes Befestigungsteil umfassend:
einen ersten Eingriffsbereich an einer Rückseite des Befestigungsteiles; und
einen zweiten Eingriffsbereich an einer Vorderseite des Befestigungsteiles;
**dadurch gekennzeichnet, dass**
der erste Eingriffsbereich eine gekrümmte Oberfläche umfasst, die fähig ist, als ein Lager für Rotation des Trägers um die Rotationsachse zu wirken, die Rotationsachse quer zu der Linie, die durch den ersten Eingriffsbereich und durch den zweiten Eingriffsbereich führt, ist.

13. Der Befestigungshalter nach Anspruch 12, umfassend:
einen Kopfbereich; und
einen Halsbereich;
wobei der Kopfbereich eine grössere Abmessung als der Halsbereich hat;
der Kopfbereich umfassend:
den ersten Eingriffsbereich (900), der sich am einer Rückseite des Kopfbereichs befindet;
den zweiten Eingriffsbereich (901), der sich am einer Vorderseite des Kopfbereichs befindet; und
der Kopfbereich sich zwischen dem ersten Rückeingriffsbereich und dem zweiten Vordereingriffsbereich befindet.

14. Der Befestigungshalter nach Anspruch 13, wobei:
der Kopfbereich eine im wesentlichen flache Oberfläche umfasst; und
der zweite Eingriffsbereich eine vorstehende Lippe umfasst.

15. Ein Verfahren zur Installation der Befestigung nach einem der Ansprüche 1 bis 4, für einen Sonnenkollektor, ein Sonnenarray oder dergleichen, das Verfahren umfassend:
installieren eine Vielzahl von Befestigungshaltern an einer Struktur, so dass mindestens ein Paar von den Befestigungshaltern in einer gleichen Orientierung und gegeneinander ausgerichtet ist; und
befestigen einen Träger zu einem Befestigungsteil von jedem von der Vielzahl von den Befestigungshaltern gleichzeitig, durch Bewegung des Trägers in einer Translatorisch- und Rotationsbewegung relativ zu den Befestigungsteilen.

## Revendications

1. Un kit de montage pour un panneau solaire, un champ de panneaux solaires ou équivalent, ledit kit de montage comprenant au moins un étrier de montage (600) et au moins un montant (604), **caractérisé en ce que**:
chaque au moins un montant comprend:
une portion de corps allongée rigide;
une première portion d'engagement s'étendant depuis ladite portion de corps et qui y est attachée;
une deuxième portion d'engagement faisant face à l'opposée, et distante, de ladite première portion d'engagement, ladite deuxième portion d'engagement étant attachée à ladite portion de corps;
dans lequel ladite deuxième portion d'engagement est normalement disposée selon un rapport spatial fixe vis-à-vis de ladite première portion d'engagement lorsqu'aucune force n'est appliquée audit montant; et
lesdites première et deuxième portions d'engagement sont capables de se séparer sous l'application d'une force; et
chaque au moins un étrier de montage comprend une ou plusieurs pièces de montage, chaque pièce de montage comprenant:
une portion de tête;
une première région d'engagement disposée sur l'arrière de ladite portion de tête; et
une deuxième région d'engagement disposée sur l'avant de ladite portion de tête;
ladite portion de tête étant disposée entre ladite première portion d'engagement disposée vers l'arrière et ladite deuxième portion d'engagement disposée vers l'avant;
dans lequel ladite première portion d'engagement dudit montant est configurée pour engager ladite première région d'engagement de ladite pièce de montage; et
ladite deuxième portion d'engagement dudit au moins un montant est configurée pour engager ladite deuxième région d'engagement de ladite au moins une pièce de montage; et
l'engagement dudit au moins un montant avec ladite au moins une pièce de montage est accompli par l'application d'un mouvement de rotation et de translation dudit au moins un montant par rapport audit montage.

2. Le kit de montage selon la revendication 1, dans lequel ledit au moins un montant et ledit au moins un montage sont connectables l'un à l'autre par l'application dudit mouvement de rotation et/ou de translation selon une direction transversale à une direction parallèle à une longueur principale dudit au moins un montant.

3. Le kit de montage selon la revendication 1 ou 2, configuré de sorte que l'engagement ou le désengagement dudit au moins un montant vis-à-vis de la tête de montage puisse être accompli par l'application d'une force suffisante à la portion de tête de la au moins une pièce de montage, pour étendre temporairement la distance entre les première et deuxième portions d'engagement du au moins un montant, afin de permettre le passage de la tête entre lesdites première et deuxième portions d'engagement.

4. Le kit de montage selon l'une des revendications précédentes, dans lequel ledit au moins un montant est configuré pour engager une paire de pièces de montage d'une paire respective et correspondante de dits au moins un étriers de montage, sans besoin d'outils.

5. Un montant (604) pour monter un panneau solaire, un champ de panneaux solaires ou équivalent, ledit montant étant **caractérisé en ce qu'**il comprend:
une portion de corps allongée rigide;
une première portion d'engagement s'étendant depuis ladite portion de corps et qui y est attachée;
une deuxième portion d'engagement faisant face à l'opposée, et distante, de ladite première portion d'engagement, ladite deuxième portion d'engagement étant attachée à ladite portion de corps, dans lequel ladite deuxième portion d'engagement est disposée selon un rapport spatial fixe vis-à-vis de ladite première portion d'engagement;
dans lequel ladite deuxième portion d'engagement est capable de se déplacer par rapport à ladite portion de corps, de sorte qu'une distance entre ladite deuxième portion d'engagement et ladite première portion d'engagement soit capable d'accroissement temporaire sous l'application d'une force; et
ladite deuxième portion d'engagement retourne à son rapport original séparé vis-à-vis de ladite première portion d'engagement suite au retrait de ladite force appliquée, et
dans lequel ladite première région d'engagement comprend une surface courbe qui, en cours d'utilisation, est capable d'agir comme un palier pour la rotation dudit montant vis-à-vis d'un axe de rotation parallèle à une direction de longueur principale dudit montant.

6. Le montant selon la revendication 5, dans lequel lesdites première et deuxième portions d'engagement sont capables de se séparer sous l'application d'une force.

7. Le montant selon la revendication 6, dans lequel ladite première portion d'engagement comprend une protrusion périphérique adjacente à ladite surface courbe.

8. Le montant selon l'une des revendications 5 à 7, dans lequel :
ledit montant comprend une jupe en extension vers le bas, attachée à ladite portion de corps rigide;
ladite deuxième portion d'engagement est disposée au niveau d'une extrémité inférieure de ladite jupe;
ladite jupe est capable de se déformer par rapport à ladite portion de corps rigide, de sorte qu'une distance entre ladite deuxième portion d'engagement et ladite première portion d'engagement soit capable d'accroissement temporaire sous l'application d'une force; et
ladite jupe en extension vers le bas retourne à son rapport original séparé vis-à-vis de ladite première portion d'engagement suite au retrait de ladite force appliquée.

9. Le montant selon la revendication 8, dans lequel :
ladite première région d'engagement comprend une surface d'engagement courbe;
ladite jupe a normalement un rapport spatial fixe vis-à-vis du corps du montant et de la surface d'engagement courbe du montant lorsqu'aucune n'est appliquée aux portions d'engagement; et
la jupe est capable de se déformer par rapport à la surface d'engagement courbe sous une force appliquée entre une extrémité inférieure de ladite jupe et ladite surface courbe; et
la jupe est capable de retourner à son rapport original fixe vis-à-vis de ladite surface d'engagement courbe suite au retrait de ladite.

10. Le montant selon l'une des revendications 5 à 7, dans lequel ladite deuxième portion d'engagement comprend un bord protubérant.

11. Le montant selon l'une des revendications 5 à 10, adapté pour attachement à un montage externe par un mouvement de rotation et de translation sous manipulation par la main humaine et sans besoin d'outils.

12. Un étrier de montage (600) pour monter un panneau solaire, un champ de panneaux solaires ou équivalent, ledit étrier de montage possédant au moins un bras (901) et comprenant:
une ou plusieurs pièces de montage, chacune comprenant:
une première région d'engagement disposée sur un arrière de ladite pièce de montage; et
une deuxième région d'engagement disposée sur un avant de ladite pièce de montage;
**caractérisé en ce que**:
ladite première région d'engagement comprend une surface courbe capable d'agir comme une surface de palier pour la rotation d'un montant vis-à-vis d'un axe de rotation qui est transversal à une ligne passant à travers lesdites première et deuxième régions d'engagement.

13. L'étrier de montage selon la revendication 12, comprenant:
une portion de tête; et
une portion de collet;
dans lequel ladite portion de tête possède une plus grande dimension que ladite portion de collet;
ladite portion de tête comprenant:
ladite première région d'engagement (900) disposée sur un arrière de ladite portion de tête;
ladite deuxième région d'engagement (901) disposée sur un avant de ladite portion de tête; et
ladite portion de tête étant disposée entre ladite première portion d'engagement disposée vers l'arrière et ladite deuxième portion d'engagement disposée vers l'avant.

14. L'étrier de montage selon la revendication 13, dans lequel:
ladite portion de tête comprend une surface supérieure essentiellement plane; et
ladite deuxième région d'engagement comprend une lèvre en projection.

15. Un procédé d'installation d'un kit de montage selon l'une des revendications 1 à 4 pour un panneau solaire, un champ de panneaux solaires ou équivalent, ledit procédé comprenant les étapes consistant à:
installer plusieurs étriers de montage sur une structure, de sorte qu'au moins une paire desdits étriers de montage soit alignée selon une même orientation avec l'un opposé à l'autre; et
attacher un montant à une pièce de montage de chacun desdits plusieurs étriers de montage simultanément, en déplaçant ledit montant selon un mouvement de translation et de rotation par rapport auxdites pièces de montage.
